Europäisches Patentamt

European Patent Office

Office européen des brevets

(19)

(11) **EP 1 519 366 A2**

(12) **EUROPEAN PATENT APPLICATION**

(43) Date of publication:
30.03.2005 Bulletin 2005/13

(51) Int Cl.⁷: **G11B 7/0045**, G11B 19/12,
G11B 19/26, G11B 19/28

(21) Application number: 04020708.6

(22) Date of filing: 01.09.2004

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: 25.09.2003 JP 2003333125

(71) Applicant: **MATSUSHITA ELECTRIC INDUSTRIAL
CO., LTD.**
**Kadoma-shi, Osaka 571-8501 (JP)**

(72) Inventors:
• **Narumi, Kenji**
**Suita City Osaka 565-0824 (JP)**
• **Miyagawa, Naoyasu**
**Kawanishi city Hyogo 666-0004 (JP)**
• **Nishiuchi, Kenichi**
**Hirakata city Osaka 573-1135 (JP)**

(74) Representative: **Eisenführ, Speiser & Partner**
**Patentanwälte Rechtsanwälte**
**Postfach 10 60 78**
**28060 Bremen (DE)**

(54) **Optical information recording method, optical information recording equipment and optical information recording medium**

(57)    The object of the present invention is to reduce the time of a test recording when using the CAV recording method, and to allow a spindle motor to be inexpensive.

When performing a test recording using a medium which has a CAV recording format, a test recording area 24 for use at an intermediate linear velocity is provided at a radial position where the rotation speed of the medium is equal to or less than the rotation speed of the medium when performing information recording, and a test recording area 22 for use at a minimum linear velocity and a test recording area 23 for use at a maximum linear velocity are provided at a radial position where the rotation speed of the medium is equivalent to the rotation speed of the medium when performing information recording.

Fig.3

EP 1 519 366 A2

**Description**

BACKGROUND OF THE INVENTION

1. Field of the Invention

The present invention relates to an optical information recording medium that optically records/reproduces information, a recording/reproducing method, and recording/reproducing equipment, and particularly to a recording method where information is recorded on an optical information recording medium at a constant rotation speed.

2. Description of the Prior Art

Recently, as media for optically recording information, an optical disk, an optical card, an optical tape and the like have been proposed and developed. Particularly, an optical disk is expected to record/reproduce information with high capacity and high density.

For example, for a phase-change optical disk, information recording/reproducing is performed in the following way. When applying a laser beam focused by an optical head to an information film of the optical disk, the power of the laser being higher than a reproducing power (this power level is called a recording power) and causing the temperature of the information film to rise over its melting point, a melted portion of the film is rapidly quenched as the laser beam passes over the film, and a mark having a non-crystalline (amorphous) state is formed. In addition, when applying a laser beam focused onto the information film, of which the power is high enough to increase the temperature of the film to be more than or equal to a crystallizing temperature and less than or equal to a melting point (this power level is called a deleting power), the portion of the film where the laser was applied becomes crystalline.

Thus, recording patterns are formed on the medium consisting of marks of a data signal which are in an amorphous state, and the spaces around them which are in a crystalline state. Then, data reproducing is performed using a difference in reflectance between the crystalline area and the amorphous area.

As mentioned above, in order to form a mark on a medium, it is necessary to emit the laser while modulating the power level of the beam at least at a level between the deleting power and the recording power. A pulse waveform used for this modulation performance is called a recording pulse.

For an optical disk of the DVD (Digital Versatile Disk) type, the CLV (Constant Linear Velocity) recording method has mainly been employed until now. This recording method requires that a linear velocity, a transmission rate, and linear density are approximately constant over the whole area of the medium. In this case, the rotation speed of the medium is varied according to the recording/reproducing position of the medium (i.e.

the radial position).

Further, as an alternative to the CLV recording method, the Z-CLV (Zone Constant Linear Velocity) recording method has been proposed for ease of rotation control of a spindle motor of recording/reproducing equipment. An optical disk of a Z-CLV recording method has a format that the information area is divided into zones with a predetermined number of tracks and that the number of sectors per zone increases from an inner to an outer circumferential side. Recording/reproducing equipment for a disk having the Z-CLV format performs recording/reproducing by: decreasing a rotation frequency of the disk in a stepwise manner from an inner to an outer circumferential side (here, the rotation frequency of each zone is constant); and by keeping the linear velocity close to constant over the whole disk. Regarding the Z-CLV format, it is also referred as a M-CLV (Modified Constant Linear Velocity) format in a non-patent document (Optical Disk Technology, Radio Technology Company, p.223).

Furthermore, a CAV (Constant Angular Velocity or Constant rotational velocity) recording method has been proposed, which keeps the rotation speed and linear density of the disk approximately constant over the whole of the disk. An advantage of the CAV recording method is that a spindle motor and a control circuit thereof are produced at low cost, since control of rotation speed of the spindle motor which rotates the disk is not necessary. In addition, access speed for the disk can be shortened, because, after seeking a recording/reproducing position, it is not necessary to wait until the rotation speed reaches a predetermined speed during the recording/reproducing operation.

On the other hand, since optical disks can be interchanged in recording/reproducing equipment, then the equipment needs to perform stable recording/reproducing for a number of disks. However, even for an optical disk produced under the same conditions, the optimum power level is different due to differences in the medium which occurred during the manufacturing process or from changes of the medium over time. In addition, the power of the laser beam directed onto a recording film of the optical disk can be changed because of dirt on the surface of the substrate of the disk, a decrease in transmission efficiency of an optical system of the recording/reproducing equipment, and a change in operating conditions.

In order to deal with such variations in the recording conditions, the conditions are found by performing a test recording before recording an actual information signal on the disk. Generally, in the test recording, a certain test pattern is recorded on a test recording area of the disk, and then the optimum recording power or the shape of a recording pulse is found from the properties of the recorded signal. And on the disk, an area for the test recording (called a test recording area) is commonly prepared which is separated from the area where the information signal is recorded by a user (called a data area).

However, in the above-mentioned CAV recording method, the linear velocity and the transmission rate vary continuously according to radial position of the disk. Therefore, according to the recording/reproducing position, the recording conditions (i.e. conditions of the applied laser beam or heating/cooling conditions) of the disk to form a particular recorded mark will change.

At a radial position which has a fast linear velocity for example, the amount of heat of the laser beam applied per unit area of the disk decreases. Thus, here the laser power needs to be higher than the recording power of a radial position which has slow linear velocity.

On the other hand, at the radial position which has slow linear velocity, since the speed of the laser beam spot passing over the disk becomes slower, cooling speed of the information film of the disk also becomes slower and crystallization progresses excessively. Then, forming the information mark becomes difficult. Therefore, the duty ratio of the information pulse here needs to be smaller than the duty ratio when recording is performed at the radial position which has fast linear velocity.

In the CAV recording method, finding the recording conditions by repeating the test recording every time minute changes in linear velocity occur is not realistic because the test recording will take a great deal of time.

Thus, a method for finding the recording conditions has been proposed that evaluates the recording power of at least two linear velocities in the test recording area, then evaluates recording power at velocities other than those linear velocities by applying an interpolation or extrapolating process using the previously evaluated recording power (for example, see Japanese unexamined patent application H05-225570, pp.3-5 and Fig. 6). In addition, according to the recording linear velocity, a method such as changing a ratio of recording power and deleting power or changing a width of each recording pulse at certain intervals are disclosed (for example, see Japanese unexamined patent application 2001-118245, pp.5-7 and Fig. 1).

In the conventional recording/reproducing method described above, since the rotation speed of a spindle motor during the test recording must be faster than the rotation speed thereof during the actual information recording/reproducing, a spindle motor of high performance must be used, and because of that, the motor becomes costly. This problem is explained below.

For example, in the Japanese unexamined patent application referred to above, the test recording at a plurality of linear velocities is performed by providing the test recording area at an inner circumferential side rather than in the data area. However, in a CAV recording method, the linear velocity is faster at an outer circumferential side than at an inner circumferential side. Therefore, when performing a test recording which has a linear velocity corresponding to that of the outer circumference at the test recording area of the inner circumferential side, the rotation speed of the spindle motor is set faster according to the ratio of the radial position.

Thus, a spindle motor with higher rotation performance must be used, which is able to rotate faster than the rotation speed used for recording the actual information signals. As a result, recording/reproducing equipment becomes expensive. In addition, when performing a test recording at a plurality of linear velocities, since the spindle motor must change its speed according to the plurality of linear velocities, the test recording takes more time because of time for changing speed.

Furthermore, in the above-mentioned conventional CAV recording method, when a spiral track is formed on a disk from an internal circumference side towards an outer circumference side, there is the problem that the transmission rate during recording of the information signal becomes low at the beginning of the disk. This is because for the CAV recording method, since recording linear density is set to be approximately constant over the entire surface of the disk, the transmission rate becomes higher at the outer circumferential side. Taking into consideration that users do not always use up recording capacity in one disk, to start the recording/reproducing from the innermost circumferential side is a disadvantage with respect to the data transmission rate.

SUMMARY OF THE INVENTION

The present invention solves the conventional problems described above. The objects are to provide an optical information recording method, optical information recording equipment and an optical information recording medium that enable use of an inexpensive spindle motor for the test recording for a plurality of linear velocities, and also enable the users to start recording the information signal in a short time by reducing the time required for the test recording. In addition, the present invention is aimed at providing an optical information recording method that solves the conventional problems and enables a transmission rate for recording the information signal to be a high value from the beginning of a disk.

To achieve the above-mentioned objects, in a first aspect of the present invention, an optical information recording method includes recording an information signal on an optical information recording medium at at least two different linear velocities by rotating the medium, while keeping linear density approximately constant by changing a channel clock period according to a change of the linear velocity, and performing a test recording before recording the information signal. The test recording is performed at at least one linear velocity, and the rotation speed of the optical information recording medium when performing the test recording is equal to or less than the maximum rotation speed when recording an information signal on the medium.

According to the method, information recording equipment can be inexpensive, because the rotation frequency of a spindle motor need not be larger than the rotation frequency of information recording when performing the test recording, and so a motor which is cheaper than a conventional one is available for use.

In addition, another optical information recording method of the first aspect present invention includes recording an information signal while keeping linear density approximately constant by rotating an optical information recording medium at a constant speed $s0$ and by changing a channel clock period according to a change of linear velocity, and performing a test recording before recording the information signal The medium has a data area, the test recording is performed at a plurality of linear velocities $v$, where $v1 \leq v \leq v2$, or is performed at at least one linear velocity $v$, where $v1 < v < v2$, $v1$ denotes a linear velocity at an innermost circumferential side of the data area, and $v2$ denotes a linear velocity at an outermost circumferential side of the data area, and the rotation speed $s$ of the medium can be $s0$ or less when performing the test recording.

According to the method, even for a medium when using a CAV recording method, information recording equipment can be inexpensive, because the rotation frequency of the spindle motor need not be larger than the rotation frequency of information recording when performing the test recording, and so a motor which is cheaper than a conventional one is available for use.

Another optical information recording method of the first aspect of the present invention includes recording an information signal while keeping linear density approximately constant by rotating an optical information recording medium at a constant speed $s0$ and by changing a channel clock period according to a change of linear velocity, and performing a test recording before recording the information signal. The medium has a data area, the data area is separated into a plurality of zones with a predetermined number of tracks, a number of sectors per zone increases from an innermost zone to an outermost zone, and linear density is equal in the same zone, the test recording is performed at a plurality of linear velocities $v$, where $v1 \leq v \leq v2$, or is performed at at least one linear velocity $v$, where $v1 < v < v2$, $v1$ denotes a linear velocity at the innermost circumferential side, and $v2$ denotes a linear velocity at the outermost circumferential side, and the rotation speed $s$ of the optical information recording medium can be $s0$ or less when performing the test recording.

According to the method, even for a medium with a Z-CLV format, information recording equipment can be inexpensive, because the rotation frequency of the spindle motor need not be larger than the rotation frequency of information recording when performing the test recording, and so a motor which is cheaper than a conventional one is available for use.

Note that, regarding the optical information recording methods of the first aspect of the present invention, the test recording is preferably performed near the outermost circumferential side of the data area, because the data area is not divided at a mid position.

To achieve the above-mentioned objects, optical information recording equipment of the first aspect of the present invention is provided for recording an information signal on an optical information recording medium at at least two different linear velocities by rotating the medium, for recording the information signal while keeping linear density approximately constant by changing a channel clock period according to a change of the linear velocity, and for performing a test recording before recording the information signal, which includes , a rotation control unit operable to control the rotation speed of an optical information recording medium, a test recording unit operable to determine recording conditions by recording a test signal on the medium and an information recording unit operable to record an information signal on the medium. The test recording unit records test data at at least one linear velocity and the rotation unit controls the rotation speed of the medium when performing the test recording to be equal to or less than the maximum rotation speed when recording an information signal on the medium.

Accordingly, this information recording equipment can be inexpensive, because the rotation frequency of the spindle motor need not be larger than the rotation frequency of information recording when performing the test recording, and so a motor which is cheaper than a conventional one is available for use.

In addition, optical information recording equipment of the first aspect of the present invention is provided for recording an information signal while keeping linear density approximately constant by rotating an optical information recording medium at a constant speed $s0$ and by changing a channel clock period according to a change of linear velocity, and for performing a test recording before recording the information signal, which includes a rotation control unit operable to control the rotation speed of an optical information recording medium, a test recording unit operable to determine recording conditions by recording a test signal on the medium, and an information recording unit operable to record an information signal on the medium. The medium has a data area, the test recording unit records a test signal at a plurality of linear velocities $v$, where $v1 \leq v \leq v2$, or the test recording is performed at at least one linear velocity $v$, where $v1 < v < v2$, $v1$ denotes a linear velocity at an innermost circumferential side of the data area, and $v2$ denotes a linear velocity at an outermost circumferential side of the data area, and the rotation control unit controlling the rotation speed $s$ of the medium can be $s0$ or less when performing the test recording.

Accordingly, even for a medium with a CAV format, this information recording equipment can be inexpensive, because the rotation frequency of the spindle motor need not be larger than the rotation frequency of information recording when performing the test recording, and so a motor which is cheaper than a conventional one is available for use.

Further, optical information recording equipment of the first aspect of the present invention is provided for recording an information signal while keeping linear density approximately constant by rotating an optical information recording medium at a constant speed $s0$ and by changing a channel clock period according to a change of linear velocity, and for performing a test recording before recording the information signal, which includes a rotation control unit operable to control the rotation speed of an optical information recording medium, a test recording unit operable to determine recording conditions by recording a test signal on the medium, and an information recording unit operable to record an information signal on the medium. The medium has a data area, the data area is separated into a plurality of zones with a predetermined number of tracks, a number of sectors per zone increases from an innermost zone to an outermost zone, and linear density is equal in the same zone, the test recording unit records a test signal at a plurality of linear velocities $v$, where $v1 \leq v \leq v2$, or is performed at at least one linear velocity $v$, where $v1$ denotes a linear velocity at an innermost circumferential side, and $v2$ denotes a linear velocity at an outermost circumferential side, and the rotation control unit controls the rotation speed $s$ of the medium to be $s0$ or less when performing the test recording.

Accordingly, even for a medium with a CAV format, this information recording equipment can be inexpensive, because the rotation frequency of the spindle motor need not be larger than the rotation frequency of information recording when performing the test recording, and so a motor which is cheaper than a conventional one is available for use.

Note that, regarding the optical information recording equipment of the first aspect of the present invention, the test recording is preferably performed near the outermost circumferential side of the data area since the area is not divided in a mid position.

To achieve the above-mentioned objects, an optical information recording medium of the first aspect of the present invention is provided, on which an information signal is recorded during rotation at at least two different linear velocities while keeping linear density approximately constant by changing a channel clock period according to a change of the linear velocity, and on which a test signal is recorded before recording the information signal. The test recording is performed at at least one linear velocity, and an area for performing the test recording is provided at a radial position such that the rotation speed of the medium when performing the test recording is equal to or less than the maximum rotation speed when recording an information signal on the medium.

According to this medium, information recording equipment can be inexpensive, because the rotation frequency of the spindle motor need not be larger than the rotation frequency of information recording when performing the test recording, and so a motor which is cheaper than a conventional one is available for use.

In addition, another optical information recording medium is provided according to the first aspect of the present invention, on which an information signal is recorded during rotation at a constant speed $s0$ while keeping linear density approximately constant by changing a channel clock period according to a change of linear velocity and on which a test signal is recorded before recording the information signal. The medium has a data area, the test recording is performed at a plurality of linear velocities $v$, where $v1 \leq v \leq v2$, or at at least one linear velocity $v$, where $v1 < v < v2$, $v1$ denotes a linear velocity at an innermost circumferential side of the data area, and $v2$ denotes a linear velocity at an outermost circumferential side of the data area, and an area for performing the test recording is provided at a radial position such that the rotation speed $s$ of the medium when performing the test recording is equal to or less than the constant rotation speed $s0$ when recording an information signal on the medium.

According to this medium, even for a medium with a Z-CLV format, information recording equipment can be inexpensive, because the rotation frequency of the spindle motor need not be larger than the rotation frequency of information recording when performing the test recording, and so a motor which is cheaper than a conventional one is available for use.

Further, another optical information recording medium of the first aspect of the present invention is provided, on which an information signal is recorded during rotation at a constant speed $s0$ while keeping linear density approximately constant by changing a channel clock period according to a change of linear velocity and on which a test signal is recorded before recording the information signal. The medium has a data area, the data area is separated into a plurality of zones with a predetermined number of tracks, a number of sectors per zone increases from an innermost zone to an outermost zone, and linear density is equal in the same zone, the test recording is performed at a plurality of linear velocities $v$, where $v1 \leq v \leq v2$, or at at least one linear velocity $v$, where $v1 < v < v2$, $v1$ denotes a linear velocity at an innermost circumferential side, and $v2$ denotes a linear velocity at an outermost circumferential side, and an area for performing the test recording is provided at a radial position such that the rotation speed $s$ of the medium when performing the test recording is equal to or less than the constant rotation speed $s0$ when recording an information signal on the medium.

According to this medium, even for a medium with a CAV format, information recording equipment can be inexpensive, because the rotation frequency of the spindle motor need not be larger than the rotation frequency of information recording when performing the test recording, and so a motor which is cheaper than a conventional one is available for use.

Note that, regarding the optical information recording medium of the present invention, an area for performing the test recording is preferably provided near an outermost circumferential side of the data area, since the area is not divided in a mid position.

Moreover, for the optical information recording medium of the present invention, the test recording is performed at the linear velocity $v$ and the linear velocity $v2$, and an area for performing the test recording at the linear velocity $v2$ is preferably provided near the outermost circumferential side of the data area, because the estimated accuracy of recording conditions at each linear speed is more precise.

To achieve the above-mentioned objects, an optical information recording method of a second aspect of the present invention includes recording an information signal on an optical information recording medium at at least two different linear velocities by rotating the medium, recording the information signal while keeping linear density approximately constant by changing a channel clock period according to a change of the linear velocity, and performing a test recording before recording the information signal. The test recording is performed at at least the linear velocities of $v1$ and $v2$, where $v1$ denotes a minimum linear velocity and $v2$ denotes a maximum linear velocity when recording an information signal, and each rotation speed of the medium is approximately constant when performing the test recording.

According to this method, information recording equipment can be inexpensive, because the rotation frequency of the spindle motor need not be larger than the rotation frequency of information recording when performing the test recording, and so a motor which is cheaper than a conventional one is available for use. And, the spindle motor need not change its speed during the test recording, so the time required for the test recording can be reduced.

In addition, another optical information recording method of the second aspect of the present invention includes recording an information signal while keeping linear density approximately constant by rotating an optical information recording medium at a constant speed $s0$ and by changing a channel clock period according to a change of linear velocity, and performing a test recording before recording the information signal. The medium has a data area, the test recording is performed at at least the linear velocities of $v1$ and $v2$, where $v1$ denotes a linear velocity at an innermost circumferential side of the data area, and $v2$ denotes a linear velocity at an outermost circumferential side of the data area, and each rotation speed of the medium is approximately equal to $s0$ when performing the test recording.

According to this method, even for a medium with a CAV format, information recording equipment can be inexpensive, because the rotation frequency of the spindle motor need not be larger than the rotation frequency of information recording when performing the test recording, and so a motor which is cheaper than a conventional one is available for use. And, the spindle motor need not change its speed during the test recording, so the time required for the test recording can be reduced.

Further, another optical information recording method of the second aspect of the present invention includes recording an information signal while keeping linear density approximately constant by rotating an optical information recording medium at a constant speed $s0$ and by changing a channel clock period according to a change of linear velocity, and performing a test recording before recording the information signal. The medium has a data area, the data area is separated into a plurality of zones with a predetermined number of tracks, a number of sectors per zone increases from an innermost zone to an outermost zone, and linear density is equal in the same zone, the test recording is performed at at least the linear velocities of $v1$ and $v2$, where $v1$ denotes a linear velocity at an innermost circumferential side, and $v2$ denotes a linear velocity at an outermost circumferential side, and each rotation speed of the medium is approximately equal to $s0$ when performing the test recording.

According to this method, even for a medium with a Z-CLV format, information recording equipment can be inexpensive, because the rotation frequency of the spindle motor need not be larger than the rotation frequency of information recording when performing the test recording, and so a motor which is cheaper than a conventional one is available for use. And, the spindle motor need not change its speed during the test recording, so the time required for the test recording can be reduced.

To achieve the above-mentioned objects, optical information recording equipment of the second aspect of the present invention is provided for recording an information signal on an optical information recording medium at at least two different linear velocities by rotating the medium, for recording the information signal while keeping linear density approximately constant by changing a channel clock period according to a change of the linear velocity, and for performing a test recording before recording the information signal, including, a rotation control unit operable to control the rotation speed of an optical information recording medium, a test recording unit operable to determine recording conditions by recording a test signal on the medium, an information unit operable to record an information signal on the medium. The test recording unit performs the test recording at at least the linear velocities of $v1$ and $v2$, where $v1$ denotes a minimum linear velocity and $v2$ denotes a maximum linear velocity when recording an information signal and the rotation control unit performs each rotation speed of the optical information recording medium to be approximately constant when performing the test recording.

Accordingly, this information recording equipment can be inexpensive, because the rotation frequency of the spindle motor need not be larger than the rotation frequency of information recording when performing the test recording, and so a motor which is cheaper than a conventional one is available for use. And, the spindle motor need not change its speed during the test recording, so the time required for the test recording can be reduced.

In addition, optical information recording equipment of the second aspect of the present invention is provided for recording an information signal while keeping linear density approximately constant by rotating an optical information recording medium at a constant speed $s0$ and by changing a channel clock period according to a change of linear velocity, and for performing a test recording before recording the information signal, including, a rotation control unit operable to control the rotation speed of an optical information recording medium, a test recording unit operable to determine recording conditions by recording a test signal on the medium, and an information recording unit operable to record an information signal on the medium. The medium has a data area, the test recording unit performs the test recording at at least the linear velocities of $v1$ and $v2$, where $v1$ denotes a linear velocity at an innermost circumferential side of the data area, and $v2$ denotes a linear velocity at an outermost circumferential side of the data area, and the rotation control unit controls each rotation speed of the medium to be approximately equal to $s0$ when performing the test recording.

Accordingly, even for a medium with a CAV format, information recording equipment can be inexpensive, because the rotation frequency of the spindle motor need not be larger than the rotation frequency of information recording when performing the test recording, and so a motor which is cheaper than a conventional one is available for use. And, the spindle motor need not change its speed during the test recording, so the time required for the test recording can be reduced.

In addition, optical information recording equipment of the second aspect of the present invention is provided for recording an information signal while keeping linear density approximately constant by rotating an optical information recording medium at a constant speed $s0$ and by changing a channel clock period according to a change of linear velocity, and for performing a test recording before recording the information signal, including, a rotation control unit operable to control the rotation speed of an optical information recording medium, a test recording unit operable to determine recording conditions by recording a test signal on the medium, and an information recording unit operable to record an information signal on the medium. The medium has a data area, the data area is separated into a plurality of zones with a predetermined number of tracks, a number of sectors per zone increases from an innermost zone to an outermost zone, and linear density is equal in the same zone, the test recording unit performs the test recording at at least the linear velocities of $v1$ and $v2$, where $v1$ denotes a linear velocity at an innermost circumferential side, and $v2$ denotes a linear velocity at an outermost circumferential side of the data area, and the rotation control unit controls each rotation speed of the medium to be approximately equal to $s0$ when performing the test recording.

Accordingly, even for a medium with a Z-CLV format, this information recording equipment can be inexpensive, because the rotation frequency of the spindle motor need not be larger than the rotation frequency of information recording when performing the test recording, and so a motor which is cheaper than a conventional one is available for use. And, the spindle motor need not change its speed during the test recording, so the time required for the test recording can be reduced.

To achieve the above-mentioned objects, an optical information recording medium of the second aspect of the present invention is provided, on which an information signal is recorded during rotation at at least two different linear velocities while keeping linear density approximately constant by changing a channel clock period according to a change of the linear velocity, and on which a test signal is recorded before recording the information signal. The test recording is performed at at least the linear velocities of $v1$ and $v2$, where $v1$ denotes a minimum linear velocity and $v2$ denotes a maximum linear velocity when recording an information signal, and an area for performing the test recording is provided at a radial position such that the rotation speed of the medium is approximately constant.

According to this medium, information recording equipment can be inexpensive, because the rotation frequency of the spindle motor need not be larger than the rotation frequency of information recording when performing the test recording, and so a motor which is cheaper than a conventional one is available for use. And, the spindle motor need not change its speed during the test recording, so the time required for the test recording can be reduced.

In addition, another optical information recording medium of the second aspect of the present invention is provided, on which an information signal is recorded during rotation at a constant speed $s0$ while keeping linear density approximately constant by changing a channel clock period according to a change of linear velocity and on which a test signal is recorded before recording the information signal. The medium has a data area, the test recording is performed at at least the linear velocities of $v1$ and $v2$, where $v1$ denotes a linear velocity at an innermost circumferential side of the data area, and $v2$ denotes a linear velocity at an outermost circumferential side of the data area, and an area for performing the test recording is provided at a radial position such that the rotation speed of the medium when performing the test recording is approximately

equal to $s0$.

According to this medium, even for a medium with a CAV format, information recording equipment can be inexpensive, because the rotation frequency of the spindle motor need not be larger than the rotation frequency of information recording when performing the test recording, and so a motor which is cheaper than a conventional one is available for use. And, the spindle motor need not change its speed during the test recording, so the time required for the test recording can be reduced.

Further, another optical information recording medium of the second aspect of the present invention is provided, on which an information signal is recorded during rotation at a constant speed $s0$ while keeping linear density approximately constant by changing a channel clock period according to a change of linear velocity and on which a test signal is recorded before recording the information signal. The medium has a data area, the data area is separated into a plurality of zones with a predetermined number of tracks, a number of sectors per zone increases from an innermost zone to an outermost zone, and linear density is equal in the same zone, the test recording is performed at at least the linear velocities of $v1$ and $v2$, where $v1$ denotes a linear velocity at an innermost circumferential side, and $v2$ denotes a linear velocity at an outermost circumferential side, and an area for performing the test recording is provided at a radial position such that the rotation speed of the medium when performing the test recording is approximately equal to $s0$.

According to this medium, even for a medium with a Z-CLV format, information recording equipment can be inexpensive, because the rotation frequency of the spindle motor need not be larger than the rotation frequency of information recording when performing the test recording, and so a motor which is cheaper than a conventional one is available for use. And, the spindle motor need not change its speed during the test recording, so the time required for the test recording can be reduced.

Note that, for the above optical information recording methods of the first and second aspects of the present invention, the test recording may be used to determine a laser power and/or a recording pulse waveform for recording the information signal.

Moreover, for the above optical information recording mediums of the first and second aspects of the present invention, recording the information signal a constant rotation speed is preferable, because the medium can be used with both the equipment which performs recording at a constant linear speed and the equipment which performs recording at a constant rotation speed.

To achieve the above-mentioned objects, an optical information recording method of a third aspect of the present invention includes recording an information signal while keeping linear density approximately constant by rotating an optical information recording medium at a constant speed $s0$ and by changing a channel clock period according to a change of linear velocity. The medium has a spiral track, and recording an information signal on the medium is performed from an outer circumferential side towards an inner circumferential side in a case when the medium rotates in a predetermined direction and a laser spot has shifted in a direction from an inner circumferential side towards an outer circumferential side.

According to this method, the effect of recording information at a high data transmission rate at the beginning of the disk can be achieved.

To achieve the above-mentioned objects, an optical information recording method of a fourth aspect of the present invention includes recording an information signal while keeping linear density approximately constant by rotating an optical information recording medium at a constant speed $s0$ and by changing a channel clock period according to a change of linear velocity, and performing a test recording before recording the information signal. The medium has a data area, the data area is separated into a plurality of zones with a predetermined number of tracks, a number of sectors per zone increases from an innermost zone to an outermost zone, and linear density is equal in the same zone, the medium has a spiral track, and recording an information signal on the medium is performed from the outermost circumferential side towards the innermost circumferential side in the case when the medium rotates in a predetermined direction and a laser spot has shifted from the innermost circumferential side towards the outermost circumferential side.

According to this method, even for a medium with a Z-CLV format, the effect of recording information at a high data transmission rate from the beginning of the disk can be achieved.

In the optical information recording methods of the third and fourth aspects of the present invention, recording in a zone is preferably performed in a direction from an inner circumferential side towards an outer circumferential side.

In addition, in the optical information recording method of the fourth aspect of the present invention, recording in a zone is preferably performed in a direction from an inner circumferential side towards an outer circumferential side, because the number of track jumps when recording an information signal can be reduced.

Moreover, in the optical information recording method of the fourth aspect of the present invention, jumping between tracks in a direction from an outer circumferential side towards an inner circumferential side preferably occurs once every rotation of the medium when recording.

According to an optical information recording method of the present invention, since the rotation frequency of a spindle motor during test recording need not to be larger than the rotation frequency thereof during information recording, a motor which is cheaper than a conventional one can be employed. As a result, information recording equipment can also be inexpensive. In addition, the time required for changing the speed during the test recording can be cut down, thus the amount of time required for the entire test recording can be reduced.

Further, according to the optical information recording method of the present invention, by performing the recording using a CAV recording method from an outer circumferential side on a medium which has a spiral track from an inner towards an outer circumferential side, the effect of being able to record information at a high transmission rate from the beginning of the disk can be achieved.

BRIEF DESCRIPTION OF THE DRAWINGS

FIG. 1 is a block diagram showing the structure of recording/reproducing equipment described in the embodiments of the present invention.

FIG. 2 shows the format of an optical disk described in Embodiment 1 of the present invention.

FIG. 3 is a flow chart showing use of recording/reproducing equipment described in Embodiment 1.

FIG. 4 shows the format of an optical disk described in another embodiment of Embodiment 1.

FIG. 5 is a flow chart showing use of recording/reproducing equipment described in another embodiment of Embodiment 1.

FIG. 6 shows the format of an optical disk described in another embodiment of Embodiment 1.

FIG. 7 is a flow chart showing parameters when recording a disk having a Z-CLV format using a CAV method described in another embodiment of Embodiment 1.

FIG. 8 is a diagram showing a direction of movement of a laser spot on a track described in Embodiment 2 of the present invention.

FIG. 9 is a diagram showing a recording direction on the disk described in another embodiment of Embodiment 2 of the present invention.

DESCRIPTION OF THE PREFERRED EMBODIMENTS

Hereinafter, embodiments of the present invention will be described in more detail.

(Structure of Embodiment 1)

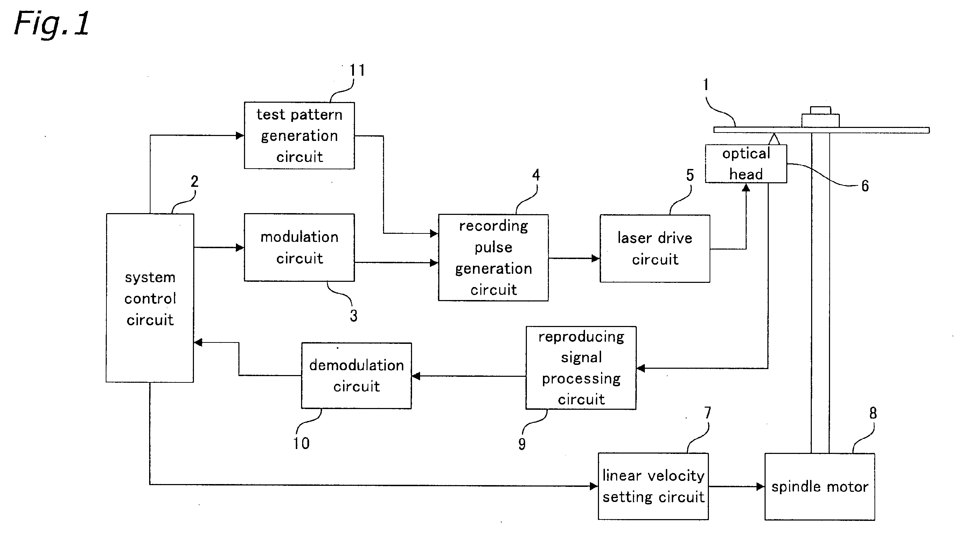

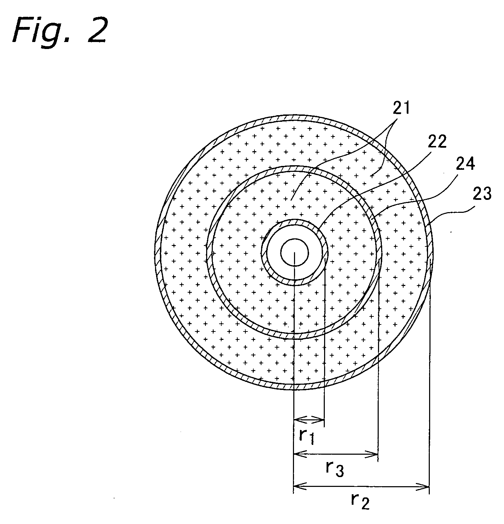

First, for an optical information recording/reproducing method of embodiment 1 of the present invention, a structure for performing a test recording will be described using Fig. 1 and Fig. 2.

In the present embodiment, performing the test recording on a disk by a CAV recording method at three points having a minimum linear velocity $v1$, a maximum linear velocity $v2$, and an intermediate linear velocity $v$ (here, $v = (v1+v2)/ 2$), for example, will be described.

Fig. 1 is a block diagram showing an overview structure of the information recording/reproducing equipment described in this embodiment of the present invention.

Reference numeral 1 is an optical disk which records/reproduces data, and reference numeral 2 is a system control circuit for controlling all of the recording/reproducing equipment. Reference numeral 3 is a modulation circuit for generating an information data signal which is binarized according to the recording data, and reference numeral 4 is a recording pulse generation circuit for generating pulses driving a laser in accordance with the information data signal. Reference numeral 5 is a laser drive circuit for modulating an electric current which drives a laser in an optical head 6 in accordance with a pulse output from the recording pulse generation circuit. The reference numeral 6 is the optical head focusing the laser beam onto the optical disk 1. Reference numeral 7 is a linear velocity setting circuit controlling the linear velocity (i.e. a rotation frequency) of the optical disk, and reference numeral 8 is a spindle motor for rotating the optical disk 1. Reference numeral 9 is a reproducing signal processing circuit for performing waveform processing of the reproducing signal in accordance with a reflection light from the optical disk 1, and reference numeral 10 is a demodulation circuit to receive the reproducing data. Reference numeral 11 is a test pattern generation circuit for sending out a test pattern signal during the test recording.

Fig. 2 is a diagram showing a structure (i.e. format) of the optical disk described in this embodiment of the present invention. The disk includes test recording areas 22, 24 and 23, which each corresponds to an innermost circumferential side (radius r1), an intermediate circumference (radius r2) and an outermost circumferential side (radius r3) in this order, and the disk has a data area 21 between each test recording area.

(Operation of Embodiment 1)

Next, the operation of recording/reproducing equipment of embodiment 1 will be described using Fig. 1, Fig. 2 and Fig. 3.

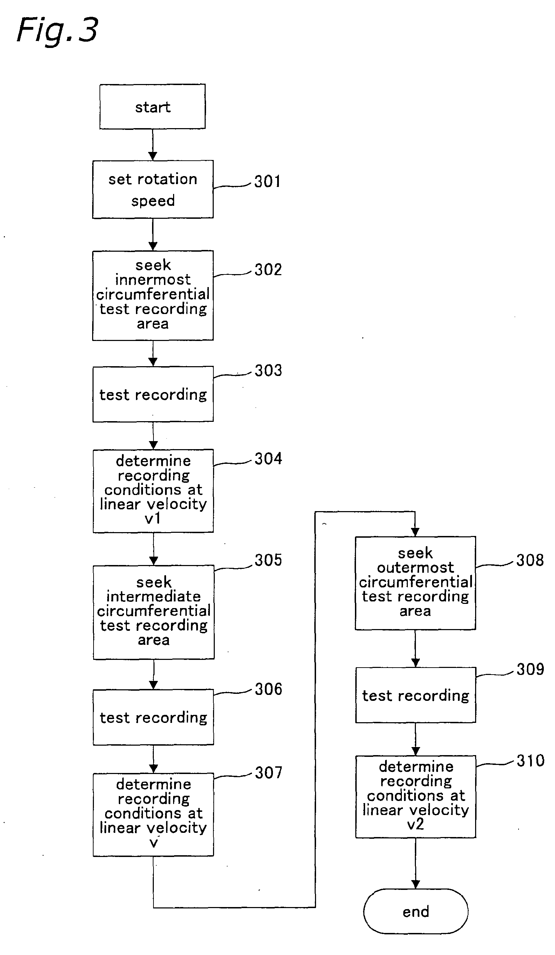

Fig. 3 is a flow chart showing an operation of the embodiment.

When recording, first, in a step of setting the rotation speed 301 (hereinafter, the step is abbreviated to S301), the rotation speed setting circuit 7 controls a rotation frequency of the spindle motor 8 and rotates the optical disk 1 at the rotation speed $s0$, which is the rotation speed of information recording, after receiving an order from the system control circuit 2. In a seeking operation step S302, the optical head 6 seeks the innermost circumferential test recording area 22 on the optical disk 1. The linear velocity at this point is the minimum linear velocity $v1$ during information recording. The test recording area 22 is provided at a radial position such that the rotation speed of the optical disk 1 when performing the test recording at the minimum velocity $v1$ becomes equal to the rotation speed $s0$ of information recording.

In a test recording step S303, the system control circuit 2 determines the optimum recording conditions for the linear velocity. In this step, the system control circuit 2 sets a channel clock period for recording the information to be inversely related to the linear velocity (i.e. in this case, since the linear velocity is at a minimum, the channel clock period is set to be at its longest). The test pattern signal is sent to the recording pulse generation circuit 4 from the test pattern generation circuit 11, and the optical head 6 is driven by the laser drive circuit 5, then the recording on the optical disk 1 is performed. The reproducing signal is obtained by reproducing the recorded test pattern using the optical head 6. Then the signal is turned into reproducing data after going through the reproducing signal processing circuit 9 and the demodulation circuit 10, and the quality of the reproducing data is evaluated by the system control circuit 2.

In a step of determining recording conditions S304, the system control circuit 2 determines the recording conditions which allow the recording data to have the best quality.

As the recording conditions determined from step S304, it is preferable to determine: the emission power level of the laser while recording, such as the recording power or the deleting power; and the waveform of the recording pulse. This is because the optimum emission power level and the waveform of the recording pulse vary with high sensitivity according to the linear velocity.

Next, in a seeking operation step S305, the optical head 6 seeks the intermediate circumferential test recording area 24 on the optical disk 1. In a test recording step S306 and a step of determining recording conditions S307, the recording conditions at the linear velocity $v$ are determined by performing the test recording in the same manner as the steps S303 and S304.

Here, a point of the present invention is providing the test recording area 24 at the radial position where the rotation speed of the optical disk 1 is equal to or less than the rotation speed $s0$ of the information recording when test recording is performed at the linear velocity $v$.

In other words, in the present embodiment, the test recording area 24 is provided at the radial position r3 where $r3 \geq (r1+r2)$, since $v = (v1+v2)/2$. From this, since the rotation speed of the test recording at the linear velocity $v$ does not exceed $s0$, the rotation speed of the spindle motor 8 need not have a high speed. Thus, the maximum rotation speed required for the spindle motor is equal to or less than $s0$, even when test recording. Conventionally, since the rotation speed needs to be equal to or more than $s0$ during the test recording, a spindle motor rotating at a higher speed than the information recording is required. On the other hand, in the present embodiment, a spindle motor that is cheaper than a conventional one can be employed. As a result, information recording equipment can also be inexpensive.

In addition, a test recording area 24 is more preferably provided at a radial position where the rotation speed of the optical disk 1 is equal to the rotation speed $s0$ of the information recording when test recording is performed at the linear velocity $v$. In other words, the test recording area 24 is provided at the radial position r3, where $r3 = (r1+r2)$, and the rotation speed of the test recording at linear velocity $v$ is equal to the rotation speed of the previous test recording at linear velocity $v1$ in the test recording area 22. As a result, the spindle motor 8 need not slow down from $s0$ before performing the test recording at the linear velocity $v$ (i.e. before step S306) and also need not speed up to $s0$ after determining the recording conditions at linear velocity $v$ (i.e. after step S307). Thus, the time required for changing speed is cut down, and the amount of time required for the entire test recording can be reduced.

After determining the recording conditions at the linear velocity $v$ in the step S307, the optical head 6 seeks the outermost circumferential test recording area 23 on the optical disk 1 by a seeking operation step S308. The linear velocity here is the maximum linear velocity $v2$ of the information recording.

In a test recording step S309 and a step of determining recording conditions S310, like steps S303 and S304, the test recording finishes after determining the recording conditions at the linear velocity $v2$. After the test recording, recording of an actual information signal on the optical disk 1 begins.

Here, a point to note is that providing the test recording area 23 at the radial position where the rotation speed of the optical disk 1 is equal to the rotation speed $s0$ of the information recording when test recording is performed at the maximum linear velocity $v2$. In other words, with the CAV recording method, not only by providing an recording area at a maximum linear velocity $v2$ in an outermost circumferential side of the optical disk, but also by providing a test recording area 23 near the outermost circumferential side, the rotation speed need not to be faster than $s0$. Thus, in the same way as performing the test recording at the linear velocity $v$, a spindle motor that is cheaper than a conventional one can be employed. As a result, information recording equipment can also be inexpensive. In addition, the time required for changing the speed of the test recording can be cut down, and the amount of time required for the entire test recording can be reduced.

According to the present embodiment described above, for a medium using the CAV recording method, a test recording area which has an intermediate linear velocity is provided at a radial position where its rotation speed is equal to or less than that of the medium during the information recording. Furthermore, during the test recording, test recording areas having a minimum linear velocity and a maximum linear velocity are provided at a radial position where their rotation speed is equivalent to that of the medium during information recording. From the above, a spindle motor that is cheaper than a conventional one can be employed. As a result, information recording equipment can also be inexpensive. In addition, the time required for changing the speed of the test recording can be cut down, and the amount of time required for the entire test recording can be reduced.

(Modification 1 of Embodiment 1)

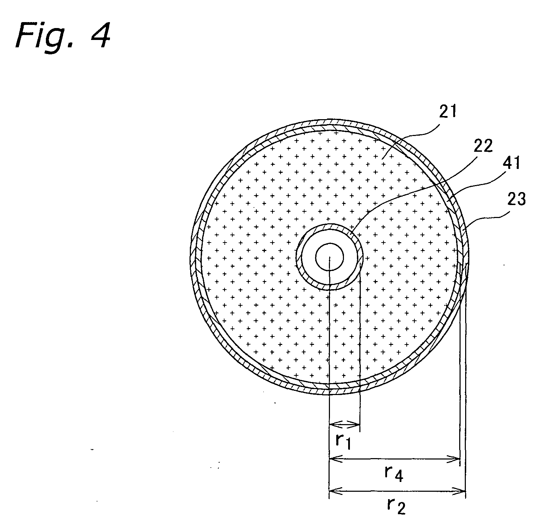

In the embodiment described above, the test recording area 24 of for use at an intermediate linear velocity $v$ is provided at an intermediate position of the data area 21. However, depending on the format of the medium, the data area sometimes cannot be divided at a mid position. In this case, an optical disk preferably has the structure shown in Fig. 4. A difference between the structure of Fig. 4 and the above-mentioned embodiment (Fig. 2) is that a test recording area 41 for use at intermediate linear velocity $v2$ is provided near an outermost circumference of the disk (i.e. at a radial position r4).

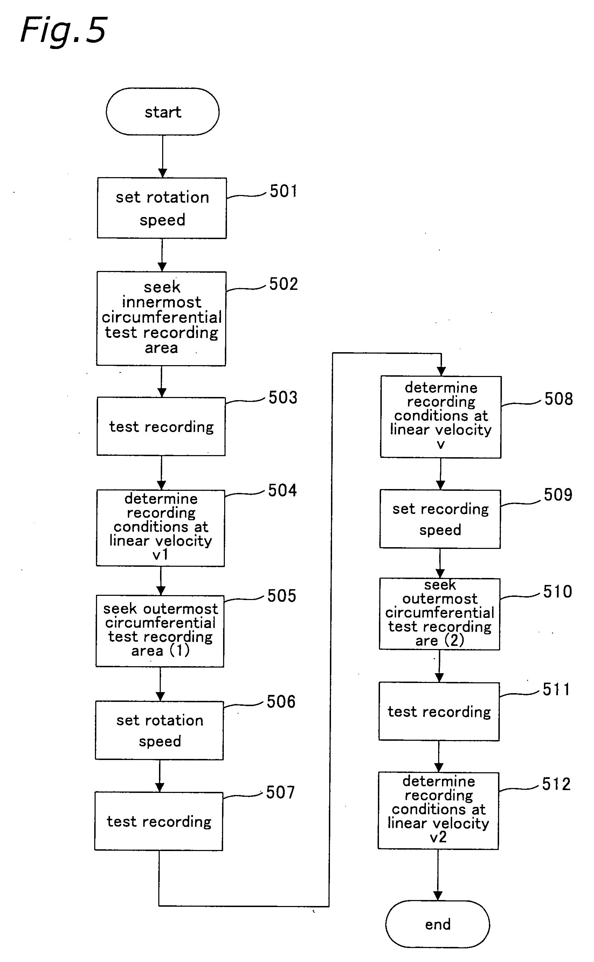

A flow chart of the operation of the embodiment having the structure of Fig. 4 is shown in Fig. 5. A difference between the operation of Fig. 5 and the embodiment above is that, the spindle motor 8 is slowed down from speed $s0$ by the step of setting the rotation speed S506 before test recording (S507) at the intermediate linear velocity v, then is speed up to $s0$ (S509) by the step of setting the rotation speed S509 after determining recording conditions.

In this embodiment, although the operation of changing the speed of the spindle motor 8 is performed during the test recording at the intermediate linear velocity $v$, the method has an advantage that the data area of the optical disk 1 is not divided by the test recording area. Moreover, the spindle motor need not rotate faster than $s0$, and so information recording equipment can be inexpensive. This effect is the same as the embodiment described above.

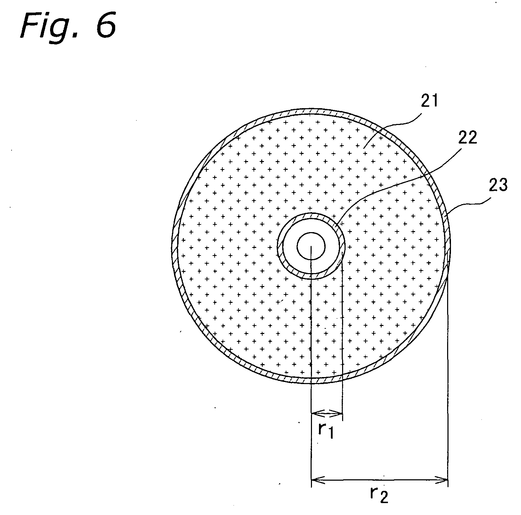

Note that, in this embodiment, the test recording area 41 for use at the intermediate linear velocity $v$ and the test recording area 23 for use at the maximum linear velocity are shown as a different area. However, as shown in the structure of the optical disk of Fig. 6, the test recording area 23 for use at the maximum linear velocity can also be the test recording area for use at the intermediate linear velocity.

(Modification 2 of Embodiment 1)

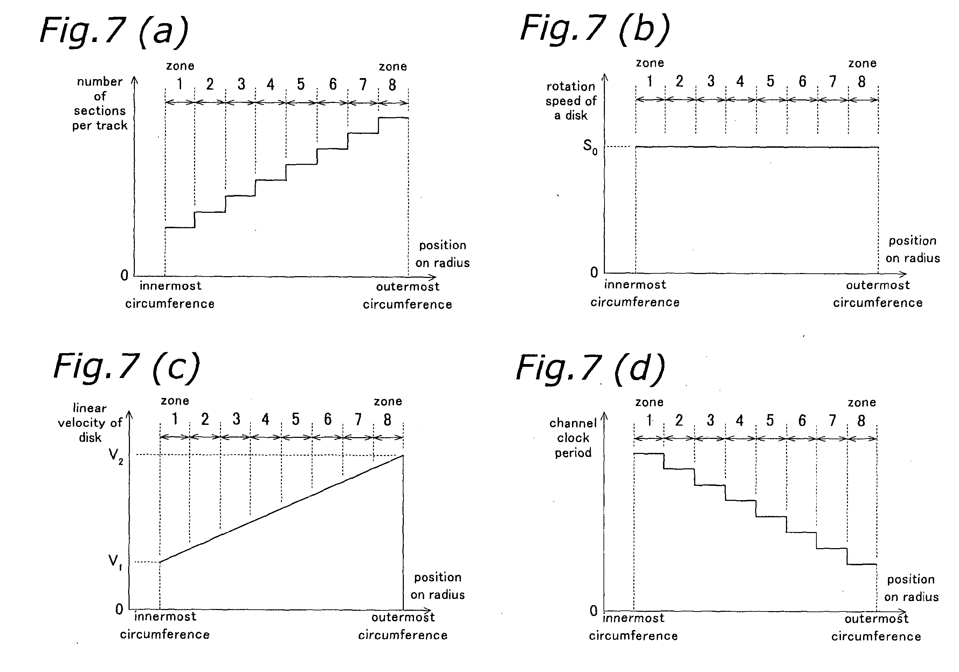

In the embodiment above, in order to set linear density of the disk to be constant over the whole area of the medium, a CAV recording method that makes a channel clock period shorten in an inversely proportional manner to increases of the linear velocity is explained. Other than this embodiment, a method that records a disk with a Z-CLV format using a CAV recording method is also possible. This embodiment is described below in reference to Fig. 7.

Fig. 7 shows changes in various settings at different points along a disk radius when the recording is performed on a disk of the Z-CLV format by applying the CAV recording method. In the embodiment, the situation where a data area is divided into 8 zones is explained.

Fig. 7 (a) shows a sector number per track of a disk of Z-CLV format, and that the number increases towards an outer circumferential side of the disk. Fig. 7 (b) shows the rotation speed of the disk, and that the rotation speed is set to be constant over the inner and the outer circumferential sides. Fig. 7 (c) shows the linear velocity of the disk, and that in this case, the same as the above-mentioned embodiment, the linear velocity becomes faster towards the outer circumferential side of the disk. Fig. 7 (d) shows a channel clock period during information recording, during which the period of each zone is set to be constant, and the period becomes smaller in a stepwise manner towards an outer circumferential side of the disk. From this, the recording can be performed by applying the CAV recording method using the same linear density as the Z-CLV recording method.

Regarding the test recording when using the CAV recording method with the disk of the Z-CLV format, the same effect as the above-mentioned embodiment is obtained. The test recording is performed by setting a test recording area of a zone (for example, zone 4 or 5) for use at the intermediate linear velocity at a radial position where the rotation speed of the medium is equal to or less than the rotation speed of the information recording, and by setting a test recording area of a zone (zone 1) for use at the minimum linear velocity and of a zone (zone 8) for use at the maximum linear velocity at a radial position where the rotation speed of the medium is equivalent to the rotation speed of information recording. From the above, a spindle motor that is cheaper than a conventional one can be employed. As a result, information recording equipment can also be inexpensive. In addition, the time required for changing the speed of the test recording can be cut down, and the amount of time required for the entire test recording can be reduced.

Note that, in the above-mentioned first embodiment, the test recording is performed at three velocities, such as the minimum linear velocity, maximum linear velocity and intermediate linear velocity. However, it is also possible that the test recording is performed using only two of the linear velocities selected from the above, and for other velocities, it is calculated by using interpolation or extrapolation. Alternatively, it is possible to perform the test recording using only one of the linear velocities selected from the above, and other velocities are estimated.

(Structure and operation of Embodiment 2)

Next, the structure and operation of Embodiment 2 of the present invention are described.

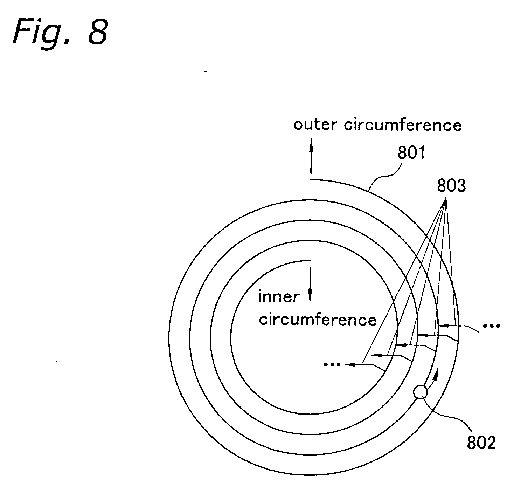

Fig. 8 shows the direction of movement of a laser spot on a track when performing recording/reproducing on an optical disk in the present embodiment. Reference numeral 801 is a track. Reference numeral 802 is a laser spot and the arrow shows the direction of movement of the spot. Reference numeral 803 shows the direction of track jumping.

Conventionally, for an optical disk on which a spiral track is formed from an inner circumferential side towards an outer circumferential side, the recording starts from the innermost circumferential side towards the outermost circumferential side of the disk.

However, for a CAV recording method, since the data transmission rate is the lowest at the innermost circumferential side (i.e. the channel clock period becomes longer), the recording speed is the lowest when beginning to record on the disk. Adversely, the recording speed is the fastest when recording is performed near the outermost circumferential side when recording/reproducing over the whole area of the disk.

Consequently, in the present invention, recording is performed on the disk using the method shown in Fig. 8. When beginning to record on the disk, the recording starts from the track 801 at the outermost circumferential side. When a laser spot 802 jumps 2 tracks (the arrows 803 shows a track jump) to the inner circumferential side once per rotation, and then the recording/reproducing continues, the disk can be used in a direction from the outer towards the inner circumferential side. This enables information recording to be performed at a higher data transmission rate when beginning to use the disk.

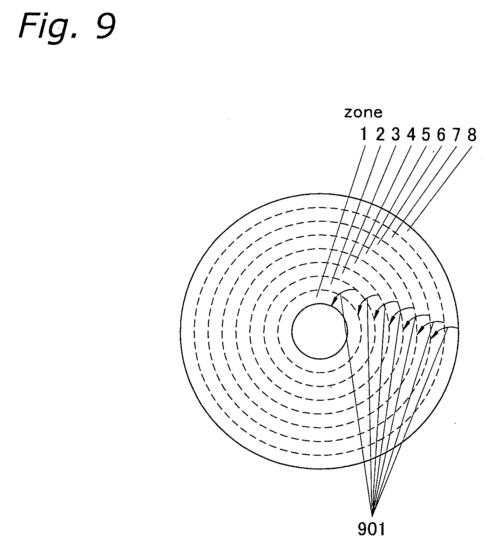

In addition, when performing CAV recording on a disk of Z-CLV format, on which a spiral track has been formed from an inner towards an outer circumferential side, a similar effect is obtained. Fig. 9 shows a recording operation of the disk with Z-CLV format, of which the data area is divided into 8 zones. In this case, the recording starts at the innermost side of zone 8 at the start of using the disk. After recording towards the outermost side of zone 8, the laser spot seeks the innermost side of zone 7 by jumping between the zones 901, and then recording starts again. After recording towards the outermost circumferential side of zone 7, the laser spot seeks the innermost side of zone 6 by jumping between the zones 901 again. Thus, by recording towards the inner circumference of the disk, information recording can be performed at a higher data transmission rate from the start of using the disk.

As mentioned above, in the present embodiment, the recording is performed from the outer circumferential side of the medium which has a spiral track starting from the inner to the outer circumferential side of the disk by using a CAV recording method. This enables the information recording to be performed at a higher data transmission rate from the start of using the disk.

Note that, in the second embodiment of the present invention, a track can be a guide groove, or a land between the guide grooves, or a combination of the guide groove and the land to be traced alternately.

Moreover, the ranges and such of the zone format, the data area and the test recording area of each embodiment are not restricted to those presented above, and can be set at suitable parameters according to the recording conditions and the medium.

Further, the above-mentioned method can also be applied if the above-mentioned optical disk is a medium with a phase-change material, or an optical magnetic material, or a dye material or the like, and if the recording film of the disk can be acted on thermally or optically to cause a partial change of state so a recording mark is produced from these portions which now have the changed optical properties.

(Example)

A more detailed example is now described for embodiment 1 of the present invention.

For a substrate of the optical disk 1, a polycarbonate resin with a diameter of 120 mm and a thickness of 0.6 mm was used. Pits which have a shape of pits and lands were pre-formatted on this substrate beforehand as a track control area.

A recording was performed on the track control area by using information which indicates the linear velocity of a recording supported by a disk, as an identifier. In this example, the disk supported the linear velocity of a recording with a range from 8.2 m/s to 20.5 m/s.

In the data area of the resin substrate, a guide groove was formed. A pitch length of the guide groove was 1.4 $\mu$m. Note that, rather than a disk structure with a data area having sectors, another structure, having phase pits formed which indicates address information between sectors, for example, is also possible.

Next, four layers including a protection film, a recording film, a protection film, and a reflection film were formed on the substrate by a sputtering method, and a protection substrate was adhered on this structure. ZnS-Si02 and GeSbTe were used as the protection film and the reflection film, respectively.

The data area was provided between the radial positions of 23.2 mm to 58.0 mm, and a test recording area was provided at two points next to the data area, such as at an inner circumferential side and an outer circumferential side. In other words, the test recording area was provided between the radial positions 23.1 mm to 23.2mm, and 58.0 mm to 58.1 mm.

When this disk rotated at a predetermined rotation frequency of 3375 rpm (i.e. constant rotation speed), the linear velocity was 8.2 m/s at an innermost circumferential side of the data area (i.e. radius 23.2 mm), and recording/reproducing was performed at a linear velocity of 20.5 m/s at an outermost circumferential side (i.e. radius 58.0 mm).

In the CAV recording method, linear density is set to be constant during recording by changing a channel clock period in accordance with a change of linear velocity over the inner to the outer circumferential side. In the example of the present embodiment, an information modulation method employed a 8-16 pulse width modulation, and a channel clock period was controlled so that a minimum mark length was 0.40 μm.

Using the disk, a test recording was performed at three velocities, such as 8.2 m/s for the minimum linear velocity, 12.3 m/s for the intermediate linear velocity and 20.5 m/s for the maximum linear velocity.

In the recording method and the medium in the example of the present embodiment, since a test recording area was provided at both the innermost and the outermost circumferential side of the disk, if the test recording was performed using a minimum linear velocity at an innermost circumferential side, and using both an intermediate linear velocity and a maximum linear velocity at an outermost circumferential side, then the rotation frequencies of the test recording at each linear velocity are would be follows:

At the minimum linear velocity: $(8.2/(2\times\pi\times0.0231))\times60=3389$ rpm
At the intermediate linear velocity: $(12.3/(2\times\pi\times0.0580))\times60=2025$ rpm
At the maximum linear velocity: $(20.5/(2\times\pi\times0.0580))\times60=3375$ rpm.

As just noted, the maximum rotation frequency required for the spindle motor is 3389 rpm.

On the other hand, in the conventional recording method and medium, a test recording also needs to be performed at an intermediate linear velocity and a maximum linear velocity in the test recording area which exists at the innermost circumferential side. Therefore, rotation frequencies of the test recording at each linear velocity would be follows:

At the minimum linear velocity: $(8.2/(2\times\pi\times0.0231))\times60=3389$ rpm
At the intermediate linear velocity: $(12.3/(2\times\pi\times0.0231))\times60=5085$ rpm
At the maximum linear velocity: $(20.5/(2\times\pi\times0.0231))\times60=8474$ rpm.

As just noted, the maximum rotation frequency required for the spindle motor is 8474 rpm.

Thus, in the example of the present embodiment, a maximum rotation frequency required for the spindle motor is approximately 40% of that of the conventional one. Therefore, a spindle motor which is cheaper and has a simpler structure than that of the conventional one can be used in recording equipment.

Note that, in the example of the present embodiment, if the test recording area for the intermediate linear velocity is provided between the radial positions of 34.8 mm to 34.09 mm when division of the data area is permitted, the rotation frequency of the test recording of the intermediate linear velocity will be as follows:

$$(12.3/(2\times\pi\times0.0348))\times60=3375 \text{ rpm.}$$

This number is almost equivalent to the rotation frequency of the test recording at both the minimum linear velocity and the maximum linear velocity. As a result, time required for changing the speed of the spindle motor is almost zero, and time required for a test recording can be reduced.

An above-mentioned optical information recording method, optical information recording equipment and an optical information recording medium itself can be applied to a personal computer, a server, or a recorder, and can obtain the same kind of effects as those described above.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing description of the embodiments according to the present invention are provided for illustration only, and not for the purpose of limiting the invention as defined by the appended claims and their equivalents.

**Claims**

1. An optical information recording method comprising recording an information signal on an optical information recording medium at at least two different linear velocities by rotating the medium, while keeping linear density approximately constant by changing a channel clock period according to a change of the linear velocity, and performing a test recording before recording the information signal, wherein:

   the test recording is performed at at least one linear velocity; and
   the rotation speed of the optical information recording medium when performing the test recording is equal to or less than the maximum rotation speed when recording the information signal on the medium.

2. An optical information recording method comprising recording an information signal while keeping linear density approximately constant by rotating an optical information recording medium at a constant speed s0 and by changing a channel clock period according to a change of linear velocity, and performing a test recording before recording the information signal, wherein:

the medium has a data area;
the test recording is performed at a plurality of linear velocities v, where $v1 \leq v \leq v2$, v1 denotes a linear velocity at an innermost circumferential side of the data area, and v2 denotes a linear velocity at an outermost circumferential side of the data area; and
the rotation speed s of the medium is s0 or less when performing the test recording.

3. An optical information recording method comprising recording an information signal while keeping linear density approximately constant by rotating an optical information recording medium at a constant speed s0 and by changing a channel clock period according to a change of linear velocity, and performing a test recording before recording the information signal, wherein:

the medium has a data area;
the test recording is performed at at least one linear velocity v, where $v1 < v < v2$, v1 denotes a linear velocity at an innermost circumferential side of the data area, and v2 denotes a linear velocity at an outermost circumferential side of the data area; and
the rotation speed s of the medium is s0 or less when performing the test recording.

4. The optical information recording method of claim 2 or 3, wherein the test recording is performed near the outermost circumferential side of the data area.

5. An optical information recording method comprising recording an information signal while keeping linear density approximately constant by rotating an optical information recording medium at a constant speed s0 and by changing a channel clock period according to a change of linear velocity, and performing a test recording before recording the information signal, wherein:

the medium has a data area;
the data area is separated into a plurality of zones with a predetermined number of tracks, a number of sectors per zone increases from an innermost zone towards an outermost zone, and linear density is equal in the same zone;
the test recording is performed at a plurality of linear velocities v, where $v1 \leq v \leq v2$, v1 denotes

a linear velocity at the innermost circumferential side, and v2 denotes a linear velocity at the outermost circumferential side; and
the rotation speed s of the optical information recording medium is s0 or less when performing the test recording.

6. An optical information recording method comprising recording an information signal while keeping linear density approximately constant by rotating an optical information recording medium at a constant speed s0 and by changing a channel clock period according to a change of linear velocity, and performing a test recording before recording the information signal, wherein:

the medium has a data area;
the data area is separated into a plurality of zones with a predetermined number of tracks, a number of sectors per zone increases from an innermost zone to an outermost zone, and linear density is equal in the same zone;
the test recording is performed at at least one linear velocity v, where $v1 < v < v2$, v1 denotes a linear velocity at the innermost circumferential side, and v2 denotes a linear velocity at the outermost circumferential side; and
the rotation speed s of the optical information recording medium is s0 or less when performing the test recording.

7. The optical information recording method of claim 5 or 6, wherein the test recording is performed near the outermost zone of the data area.

8. Optical information recording equipment for recording an information signal on an optical information recording medium at at least two different linear velocities by rotating the medium, for recording the information signal while keeping linear density approximately constant by changing a channel clock period according to a change of the linear velocity, and for performing a test recording before recording the information signal, comprising:

a rotation control unit operable to control the rotation speed of an optical information recording medium;
a test recording unit operable to determine recording conditions by recording a test signal on the medium; and
an information recording unit operable to record an information signal on the medium, wherein:

the test recording unit records test data at at least one linear velocity; and
the rotation control unit controls the rotation speed of the medium when performing the test recording to be equal to or less than a maximum rotation speed when recording an information signal on the medium.

9. Optical information recording equipment for recording an information signal while keeping linear density approximately constant by rotating an optical information recording medium at a constant speed $s0$ and by changing a channel clock period according to a change of linear velocity, and for performing a test recording before recording the information signal, comprising:

a rotation control unit operable to control the rotation speed of an optical information recording medium;
a test recording unit operable to determine recording conditions by recording a test signal on the medium; and
an information recording unit operable to record an information signal on the medium, wherein:

the medium has a data area;
the test recording unit records a test signal at a plurality of linear velocities $v$, where $v1 \leq v \leq v2$, $v1$ denotes a linear velocity at an innermost circumferential side of the data area, and $v2$ denotes a linear velocity at an outermost circumferential side of the data area; and
the rotation control unit controls the rotation speed $s$ of the medium to be $s0$ or less when performing the test recording.

10. Optical information recording equipment for recording an information signal while keeping linear density approximately constant by rotating an optical information recording medium at a constant speed $s0$ and by changing a channel clock period according to a change of linear velocity, and for performing a test recording before recording the information signal, comprising:

a rotation control unit operable to control the rotation speed of an optical information recording medium;
a test recording unit operable to determine recording conditions by recording a test signal on the medium; and
an information recording unit operable to record an information signal on the medium, wherein:

the medium has a data area;
the test recording unit records a test signal at at least one linear velocity $v$, where $v1 < v < v2$, $v1$ denotes a linear velocity at an innermost circumferential side of the data area, and $v2$ denotes a linear velocity at an outermost circumferential side of the data area; and
the rotation control unit controls the rotation speed $s$ of the medium to be $s0$ or less when performing the test recording.

11. The optical information recording equipment of claim 9 or 10, wherein the test recording unit records a test signal near the outermost circumferential side of the data area.

12. Optical information recording equipment for recording an information signal while keeping linear density approximately constant by rotating an optical information recording medium at a constant speed $s0$ and by changing a channel clock period according to a change of linear velocity, and for performing a test recording before recording the information signal, comprising:

a rotation control unit operable to control the rotation speed of an optical information recording medium;
a test recording unit operable to determine recording conditions by recording a test signal on the medium; and
an information recording unit operable to record an information signal on the medium, wherein:

the medium has a data area;
the data area is separated into a plurality of zones with a predetermined number of tracks, a number of sectors per zone increases from an innermost zone to an outermost zone, and linear density is equal in the same zone;
the test recording unit records a test signal at a plurality of linear velocities $v$, where $v1 \leq v \leq v2$, $v1$ denotes a linear velocity at an innermost circumferential side, and $v2$ denotes a linear velocity at an outermost circumferential side; and
the rotation control unit controls the rotation speed $s$ of the medium to be $s0$ or less when performing the test recording.

13. Optical information recording equipment for recording an information signal while keeping linear density approximately constant by rotating an optical information recording medium at a constant speed $s0$ and by changing a channel clock period according to a change of linear velocity, and for performing a test recording before recording the information signal, comprising:

a rotation control unit operable to control the rotation speed of an optical information recording medium;

a test recording unit operable to determine recording conditions by recording a test signal on the medium; and

an information recording unit operable to record an information signal on the medium, wherein:

the medium has a data area;

the data area is separated into a plurality of zones with a predetermined number of tracks, a number of sectors per zone increases from an innermost zone to an outermost zone, and linear density is equal in the same zone;

the test recording unit records a test signal at at least one linear velocity $v$, where $v1<v<v2$, $v1$ denotes a linear velocity at the innermost circumferential side, and $v2$ denotes a linear velocity at the outermost circumferential side; and

the rotation control unit controls the rotation speed $s$ of the medium to be $s0$ or less when performing the test recording.

14. The optical information recording equipment of claim 12 or 13, wherein the test recording unit records a test signal near the outermost circumferential side of the data area.

15. An optical information recording medium, on which an information signal is recorded during rotation at at least two different linear velocities while keeping linear density approximately constant by changing a channel clock period according to a change of the linear velocity, and on which a test signal is recorded before recording the information signal, wherein:

the test recording is performed at at least one linear velocity; and

an area for performing the test recording is provided at a radial position such that the rotation speed of the medium when performing the test recording is equal to or less than a maximum rotation speed when recording an information signal on the medium.

16. An optical information recording medium, on which an information signal is recorded during rotation at a constant speed $s0$ while keeping linear density approximately constant by changing a channel clock period according to a change of linear velocity and on which a test signal is recorded before recording the information signal, wherein:

the medium has a data area;

the test recording is performed at at least one linear velocity $v$, where $v1<v<v2$, $v1$ denotes a linear velocity at an innermost circumferential side of the data area, and $v2$ denotes a linear

velocity at an outermost circumferential side of the data area; and

an area for performing the test recording is provided at a radial position such that the rotation speed $s$ of the medium when performing the test recording is equal to or less than the constant rotation speed $s0$ when recording an information signal on the medium.

17. The optical information recording medium of claim 16, wherein an area for performing the test recording is provided near an outermost circumferential side of the data area.

18. The optical information recording medium of claim 17, wherein the test recording is performed at the linear velocity $v$ and the linear velocity $v2$, and an area for performing the test recording at the linear velocity $v2$ is provided near the outermost circumferential side of the data area.

19. An optical information recording medium, on which an information signal is recorded when being rotated at a constant speed $s0$ while keeping linear density approximately constant by changing a channel clock period according to a change of linear velocity and on which a test signal is recorded before recording the information signal, wherein:

the medium has a data area;

the data area is separated into a plurality of zones with a predetermined number of tracks, a number of sectors per zone increases from an innermost zone to an outermost zone, and linear density is equal in the same zone;

the test recording is performed at at least one linear velocities $v$, where $v1<v<v2$, $v1$ denotes a linear velocity at an innermost circumferential side, and $v2$ denotes a linear velocity at an outermost circumferential side; and

an area for performing the test recording is provided at a radial position such that the rotation speed $s$ of the medium when performing the test recording is equal to or less than the constant rotation speed $s0$ when recording an information signal on the medium.

20. The optical information recording medium of claim 19, wherein the area for performing the test recording is provided near an outermost circumferential side of the data area.

21. The optical information recording medium of claim 20, wherein the test recording is performed at the linear velocity $v$ and the linear velocity $v2$, and an area for performing the test recording at the linear velocity $v2$ is provided near the outermost circumferential side of the data area.

**22.** An optical information recording method comprising recording an information signal on an optical information recording medium at at least two different linear velocities by rotating the medium, recording the information signal while keeping linear density approximately constant by changing a channel clock period according to a change of the linear velocity, and performing a test recording before recording the information signal, wherein:

> the test recording is performed at at least the linear velocities of $v1$ and $v2$, where $v1$ denotes a minimum linear velocity and $v2$ denotes a maximum linear velocity when recording an information signal; and
> each rotation speed of the medium is approximately constant when performing the test recording.

**23.** An optical information recording method comprising recording an information signal while keeping linear density approximately constant by rotating an optical information recording medium at a constant speed $s0$ and by changing a channel clock period according to a change of linear velocity, and performing a test recording before recording the information signal, wherein:

> the medium has a data area;
> the test recording is performed at at least the linear velocities of $v1$ and $v2$, where $v1$ denotes a linear velocity at an innermost circumferential side of the data area, and $v2$ denotes a linear velocity at an outermost circumferential side of the data area; and
> each rotation speed of the medium is approximately equal to $s0$ when performing the test recording.

**24.** An optical information recording method comprising recording an information signal while keeping linear density approximately constant by rotating an optical information recording medium at a constant speed s0 and by changing a channel clock period according to a change of linear velocity, and performing a test recording before recording the information signal, wherein:

> the medium has a data area;
> the data area is separated into a plurality of zones with a predetermined number of tracks, a number of sectors per zone increases from an innermost zone to an outermost zone, and linear density is equal in the same zone;
> the test recording is performed at least the linear velocities of $v1$ and $v2$, where $v1$ denotes a linear velocity at an innermost circumferential side, and $v2$ denotes a linear velocity at an outermost circumferential side; and
each the rotation speed of the medium is approximately equal to $s0$ when performing the test recording.

**25.** Optical information recording equipment for recording an information signal on an optical information recording medium at at least two different linear velocities by rotating the medium, for recording the information signal while keeping linear density approximately constant by changing a channel clock period according to a change of the linear velocity, and for performing a test recording before recording the information signal, comprising:

> a rotation control unit operable to control the rotation speed of an optical information recording medium;
> a test recording unit operable to determine recording conditions by recording a test signal on the medium; and
> an information recording unit operable to record an information signal on the medium, wherein:

> > the test recording unit performs the test recording at at least the linear velocities of $v1$ and $v2$, where $v1$ denotes a minimum linear velocity and $v2$ denotes a maximum linear velocity when recording an information signal; and
> > the rotation control unit controls each rotation speed of the optical information recording medium to be approximately constant when performing the test recording.

**26.** Optical information recording equipment for recording an information signal while keeping linear density approximately constant by rotating an optical information recording medium at a constant speed $s0$ and by changing a channel clock period according to a change of linear velocity, and for performing a test recording before recording the information signal, comprising:

> a rotation control unit operable to control the rotation speed of an optical information recording medium;
> a test recording unit operable to determine recording conditions by recording a test signal on the medium; and
> an information recording unit operable to record an information signal on the medium, wherein:

> > the medium has a data area;
> > the test recording unit records a test signal at at least the linear velocities of $v1$ and $v2$, where $v1$ denotes a linear velocity at an innermost circumferential side of the data ar-

ea, and $v2$ denotes a linear velocity at an outermost circumferential side of the data area; and

the rotation control unit controls each rotation speed of the optical information recording medium to be approximately equal to $s0$ when performing the test recording.

27. Optical information recording equipment for recording an information signal while keeping linear density approximately constant by rotating an optical information recording medium at a constant speed $s0$ and by changing a channel clock period according to a change of linear velocity, and for performing a test recording before recording the information signal, comprising:

a rotation control unit operable to control the rotation speed of an optical information recording medium;

a test recording unit operable to determine recording conditions by recording a test signal on the medium; and

an information recording unit operable to record an information signal on the medium, wherein:

the medium has a data area;

the data area is separated into a plurality of zones with a predetermined number of tracks, a number of sectors per zone increases from an innermost zone to an outermost zone, and linear density is equal in the same zone;

the test recording unit records a test signal at at least the linear velocities of $v1$ and $v2$, where $v1$ denotes a linear velocity at an innermost circumferential side, and $v2$ denotes a linear velocity at an outermost circumferential side of the data area; and

the rotation control unit controls each rotation speed of the medium to be approximately equal to $s0$ when performing the test recording.

28. An optical information recording medium, on which an information signal is recorded during rotation at at least two different linear velocities while keeping linear density approximately constant by changing a channel clock period according to a change of the linear velocity, and on which a test signal is recorded before recording the information signal, wherein:

the test recording is performed at at least the linear velocities of $v1$ and $v2$, where $v1$ denotes a minimum linear velocity and $v2$ denotes a maximum linear velocity when recording an information signal; and

each area for performing the test recording is provided at a radial position such that the rotation speed of the medium is approximately constant.

29. An optical information recording medium, on which an information signal is recorded when being rotated at a constant speed $s0$ while keeping linear density approximately constant by changing a channel clock period according to a change of linear velocity and on which a test signal is recorded before recording the information signal, wherein:

the medium has a data area;

the test recording is performed at at least the linear velocities of $v1$ and $v2$, where $v1$ denotes a linear velocity at an innermost circumferential side of the data area, and $v2$ denotes a linear velocity at an outermost circumferential side of the data area; and

each area for performing the test recording is provided at a radial position such that the rotation speed of the medium when performing the test recording is approximately equal to $s0$.

30. An optical information recording medium, on which an information signal is recorded during rotation at a constant speed $s0$ while keeping linear density approximately constant by changing a channel clock period according to a change of linear velocity and on which a test signal is recorded before recording the information signal, wherein:

the medium has a data area;

the data area is separated into a plurality of zones with a predetermined number of tracks, a number of sectors per zone increases from an innermost zone to an outermost zone, and linear density is equal in the same zone;

the test recording is performed at at least the linear velocities of $v1$ and $v2$, where $v1$ denotes a linear velocity at an innermost circumferential side, and $v2$ denotes a linear velocity at an outermost circumferential side; and

each area for performing the test recording is provided at a radial position such that the rotation speed of the medium when performing the test recording is approximately equal to $s0$.

31. The optical information recording method of claim 1-7 or 22-24, wherein laser power for recording the information signal is determined by performing the test recording.

32. The optical information recording method of claim 1-7 or 22-24, wherein a recording pulse waveform for recording the information signal is determined by performing the test recording.

**33.** The optical information recording method of claim 15-21 or 28-30, wherein recording an information signal is also performed at a constant linear velocity.

**34.** An optical information recording method comprising recording an information signal while keeping linear density approximately constant by rotating an optical information recording medium at a constant speed $s0$ and by changing a channel clock period according to a change of linear velocity, wherein:

the medium has a spiral track; and
recording an information signal on the medium is performed from an outer circumferential side towards an inner circumferential side in the case when the medium rotates in a predetermined direction and a laser spot has shifted in a direction from an inner circumferential side towards an outer circumferential side.

**35.** An optical information recording method of claim 34, wherein jumping between tracks in a direction from an outer circumferential side towards an inner circumferential side occurs once every rotation of the medium when recording.

**36.** An optical information recording method comprising recording an information signal while keeping linear density approximately constant by rotating an optical information recording medium at a constant speed $s0$ and by changing a channel clock period according to a change of linear velocity, and performing a test recording before recording the information signal, wherein:

the medium has a data area;
the data area is separated into a plurality of zones with a predetermined number of tracks, a number of sectors per zone increases from an innermost zone to an outermost zone, and linear density is equal in the same zone;
the medium has a spiral track; and
recording an information signal on the medium is performed from the outermost circumferential side towards the innermost circumferential side in the case when the medium rotates in a predetermined direction and a laser spot has shifted from the innermost circumferential side towards the outermost circumferential side.

**37.** An optical information recording method of claim 36, wherein jumping between tracks in a direction from an outer circumferential side towards an inner circumferential side occurs once every rotation of the medium when recording.

**38.** An optical information recording method of claim 36, wherein recording in the zone is performed in a direction from an inner circumferential side towards an outer circumferential side.

# Fig.1

## Fig. 2

*Fig.3*

*Fig. 4*

# Fig.5

```
           ( start )
               │
               ▼
      ┌─────────────────┐
      │  set rotation   │─── 501
      │     speed       │
      └─────────────────┘
               │
               ▼
      ┌─────────────────┐
      │      seek        │─── 502
      │   innermost      │
      │ circumferential  │
      │ test recording   │
      │      area        │
      └─────────────────┘
               │
               ▼
      ┌─────────────────┐
      │                 │─── 503
      │ test recording  │
      └─────────────────┘
               │
               ▼
      ┌─────────────────┐
      │   determine     │─── 504
      │   recording     │
      │ conditions at   │
      │ linear velocity │
      │       v1        │
      └─────────────────┘
               │
               ▼
      ┌─────────────────┐
      │ seek outermost  │─── 505
      │ circumferential │
      │ test recording  │
      │     area (1)    │
      └─────────────────┘
               │
               ▼
      ┌─────────────────┐
      │  set rotation   │─── 506
      │     speed       │
      └─────────────────┘
               │
               ▼
      ┌─────────────────┐
      │                 │─── 507
      │ test recording  │
      └─────────────────┘
               │
               └──────────────────────────┐
                                          │
      ┌─────────────────┐                 │
      │   determine     │─── 508          │
      │   recording     │◄────────────────┘
      │ conditions at   │
      │ linear velocity │
      │        v        │
      └─────────────────┘
               │
               ▼
      ┌─────────────────┐
      │ set recording   │─── 509
      │     speed       │
      └─────────────────┘
               │
               ▼
      ┌─────────────────┐
      │     seek        │─── 510
      │   outermost     │
      │ circumferential │
      │ test recording  │
      │     are (2)     │
      └─────────────────┘
               │
               ▼
      ┌─────────────────┐
      │                 │─── 511
      │ test recording  │
      └─────────────────┘
               │
               ▼
      ┌─────────────────┐
      │   determine     │─── 512
      │   recording     │
      │ conditions at   │
      │ linear velocity │
      │       v2        │
      └─────────────────┘
               │
               ▼
           (  end  )
```

*Fig. 6*

# Fig.7 (a)

number of sections per track

zone 1 2 3 4 5 6 7 8

position on radius

innermost circumference    outermost circumference

# Fig.7 (b)

rotation speed of a disk

zone 1 2 3 4 5 6 7 8

$S_0$

position on radius

innermost circumference    outermost circumference

# Fig.7 (c)

linear velocity of disk

zone 1 2 3 4 5 6 7 8

$V_2$

$V_1$

position on radius

innermost circumference    outermost circumference

# Fig.7 (d)

channel clock period

zone 1 2 3 4 5 6 7 8

position on radius

innermost circumference    outermost circumference

EP 1 519 366 A2

Fig. 8

## Fig. 9